# EUROPÄISCHE PATENTSCHRIFT

(11) **EP 2 628 086 B1**
(45) Veröffentlichungstag und Bekanntmachung des Hinweises auf die Patenterteilung: **18.11.2015**
(21) Anmeldenummer: 11757311.3
(22) Anmeldetag: 14.09.2011
(51) Int. Cl.: G06F 13/40

(54) **SCHNITTSTELLENÜBERWACHUNGSVORRICHTUNG FÜR EINEN SCHNITTSTELLENANSCHLUSS UND VERWENDUNG EINER SCHNITTSTELLENÜBERWACHUNGSVORRICHTUNG**
INTERFACE MONITORING DEVICE FOR AN INTERFACE CONNECTION AND USE OF AN INTERFACE MONITORING DEVICE
DISPOSITIF DE SURVEILLANCE D'INTERFACE POUR UNE CONNEXION D'INTERFACE ET UTILISATION D'UN DISPOSITIF DE SURVEILLANCE D'INTERFACE

(30) Priorität: 13.10.2010 DE 102010048352
(43) Veröffentlichungstag der Anmeldung: 21.08.2013
(73) Patentinhaber: Fujitsu Technology Solutions Intellectual Property GmbH, 80807 München (DE)
(72) Erfinder: MARKEL, Ottwald, 86199 Augsburg (DE); HÄUSSERMANN, Rudolf, 86150 Augsburg (DE)
(74) Vertreter: Epping - Hermann - Fischer
(86) Internationale Anmeldenummer: PCT/EP2011/065952
(87) Internationale Veröffentlichungsnummer: WO 2012/048981

(56) Entgegenhaltungen:
- EP-A1- 1 758 029
- US-A1- 2002 169 915
- US-A1- 2003 056 051
- US-A1- 2007 259 542
- US-A1- 2010 023 744
- "Universal Serial Bus 3.0 Specification", INTERNET CITATION, 12. November 2008 (2008-11-12), Seite COMPLETE, XP007906852, Gefunden im Internet: URL:http://www.usb.org/developers/docs/ [gefunden am 2009-01-20]

## Beschreibung

Die Erfindung betrifft eine Schnittstellenüberwachungsvorrichtung für einen Schnittstellenanschluss zum Anschließen eines Peripheriegerätes über wenigstens eine erste Datenleitung. Darüber hinaus betrifft die Erfindung die Verwendung einer derartigen Schnittstellenüberwachungsvorrichtung in einem USB-Host-Adapter.

USB- und technisch ähnliche Schnittstellen unterstützen so genanntes "Hot plugging", also das Anschließen und Entfernen von Peripheriegeräten an einen Hostadapter während des Betriebs des Hostadapters und/oder des Peripheriegerätes. Zugleich unterstützen sie eine Vielzahl von unterschiedlichen Gerätetypen wie beispielsweise Mäuse und Tastaturen, Speichersticks, externe Festplatten und so weiter.

Insbesondere bei dem Anschluss externer Massenspeichermedien an ein laufendes Computersystem besteht jedoch die Gefahr, dass die Systemsicherheit eines Hostsystems gefährdet wird. Beispielsweise können durch den Anschluss von USB-Speichersticks Viren oder andere Schadprogramme auf das Hostcomputersystem übertragen werden. Zudem ist auch der Diebstahl von verhältnismäßig großen Mengen von Daten sehr einfach möglich.

Um diesen und ähnlichen Problemen entgegen zu wirken, sind Überwachungs- und Filtermechanismen bekannt, die den Anschluss bestimmter Gerätetypen an ein Computersystem ausschließen.

Eine Schnittstellenüberwachungsvorrichtung für mindestens einen differenziellen Schnittstellenanschluss mit einer positiven und einer negativen Datenleitung D+ bzw. D- zum Anschluss eines Peripheriegerätes ist aus der DE 10 2008 035 103 A1 bekannt. Dort ist insbesondere eine Schnittstellenüberwachungsvorrichtung zur Überwachung eines Schnittstellenanschlusses gemäß der USB-Spezifikation 2.0 offenbart. Die dort beschriebene Schaltung eignet sich insbesondere zur Überwachung und Deaktivierung von Datenleitungen, die eine kontinuierliche, differenzielle Signalisierung verwenden.

Der USB 2.0-Standard gestattet eine Datenübertragung mit einer Datenübertragungsrate von maximal 480 MBit/s. Um eine Datenübertragung mit noch höheren Datenübertragungsraten zu gestatten, wurde in dem nachfolgenden USB 3.0-Standard ein geänderter physikalischer Schnittstellenanschluss vorgesehen, der eine Datenübertragung mit bis zu 5 GBit/s gestattet. Insbesondere wurden zusätzlich zu einem bidirektionalen, differenziellen Leitungspaar gemäß dem USB 2.0-Standard zwei zusätzliche kapazitiv gekoppelte, unidirektionale und differenzielle Leitungspaare RX (Super Speed Receiver differential pair) und TX (Super Speed Transmitter differential pair) vorgesehen, die zusammen eine bidirektionale Hochgeschwindigkeitskommunikation zwischen einem USB-Host-Adapter und einem daran angeschlossenen USB-Gerät gestatten. Darüber hinaus umfasst der USB 3.0-Standard (Hewlett-Packard Company et al.: Universal Serial Bus 3.0 Specification, Revision 1.0, 12. November 2008, http://www.usb.org/developers/docs) weitere Änderungen, die insbesondere das Energiemanagement von an einem USB-Anschluss angeschlossenen Geräten betreffen.

Die aus dem Stand der Technik bekannte Schnittstellenüberwachungsvorrichtung eignet sich nur bedingt zur Überwachung von Schnittstellenanschlüssen gemäß dem neuen USB 3.0-Standard. Denn zum einen unterscheidet sich die eingesetzte Signalisierung auf den zusätzlichen unidirektionalen Datenleitungen aufgrund der kapazitiven Kopplung der Datenleitungen grundsätzlich von der Signalisierung über die bidirektionalen Datenleitungen D+ und D- gemäß der USB 2.0-Spezifikation. Darüber hinaus erkennt die dort beschriebene Schnittstellenüberwachungsvorrichtung nicht die Signalisierung über die zusätzlichen differenziellen Leitungspaare RX und TX und löst daher beim Anschluss von USB 3.0-Geräten eine unbeabsichtigte Deaktivierung des Schnittstellenanschlusses aus.

Aufgabe der vorliegenden Erfindung ist es, eine verbesserte Schnittstellenüberwachungsvorrichtung zu beschreiben, die zum einen verhältnismäßig einfach aufgebaut ist und zum anderen die beabsichtigte Schutzwirkung in jedem Fall sicherzustellen vermag. Die Schnittstellenüberwachungsvorrichtung soll sich insbesondere zur sicheren und zuverlässigen Überwachung eines Trennens von Geräten an kapazitiv gekoppelten Schnittstellenanschlüssen, zum Beispiel gemäß der USB-Spezifikation 3.0, eignen.

Die oben genannte Aufgabe wird durch eine Schnittstellenüberwachungsvorrichtung gemäß Patentanspruch 1 sowie die Verwendung einer derartigen Schnittstellenüberwachungsvorrichtung gemäß Patentanspruch 10 gelöst.

Gemäß einer ersten Ausgestaltung wird eine Schnittstellenüberwachungsvorrichtung für einen Schnittstellenanschluss zum Anschluss eines Peripheriegerätes über wenigstens eine erste Datenleitung an einen Schnittstellenbaustein beschrieben. Die Vorrichtung umfasst einen zwischen dem Schnittstellenbaustein und dem Schnittstellenanschluss angeordneten Kondensator, durch dass die erste Datenleitung kapazitiv mit dem Schnittstellenbaustein gekoppelt ist. Die Schnittstellenüberwachungsvorrichtung umfasst eine mit der ersten Datenleitung auf Seiten des Schnittstellenanschlusses gekoppelte erste Überwachungsschaltung, die dazu eingerichtet ist, wenigstens eine geräteseitige Terminierung der ersten Datenleitung zu überwachen und beim Erkennen, dass eine Terminierung der ersten Datenleitung nicht vorhanden ist, ein erstes Steuersignal bereitzustellen. Die Schnittstellenüberwachungsvorrichtung umfasst des Weiteren eine erste Deaktivierungsschaltung, die dazu eingerichtet ist, den Datenverkehr über die erste Datenleitung des Schnittstellenanschlusses bis zu einem Rücksetzen der Schnittstellenüberwachungsvorrichtung dauerhaft zu unterbinden, wenn das erste Steuersignal durch die erste Überwachungsschaltung bereitgestellt wurde.

Die Schnittstellenüberwachungsvorrichtung gemäß der ersten Ausgestaltung trägt dem Umstand Rechnung, dass zum Erreichen der höheren Datenübertragungsrate, beispielsweise gemäß dem USB 3.0-Standard, eine kapazitive Kopplung zwischen einem Host-Adapter und einem daran angeschlossenen Schnittstellenanschluss vorgesehen ist. Durch das kapazitive Element wird eine Entkopplung einer Gleichstromkomponente der ersten Datenleitung bewirkt. Gleichzeitig wird durch das kapazitive Element eine Kopplung einer Wechselstromkomponente erreicht.

Die erfindungsgemäße Überwachungsschaltung macht sich die kapazitive Kopplung zunutze, in dem sie eine geräteseitige Terminierung der ersten Datenleitung hinter dem kapazitiven Element, also auf Seiten des Schnittstellenanschlusses bzw. eines daran angeschlossenen Peripheriegerätes, überwacht. Die Überwachung der Terminierung der Datenleitung ist damit unabhängig von der eingesetzten, hochfrequenten Signalisierung über die erste Datenleitung.

Gemäß einer vorteilhaften Ausgestaltung, ist die Überwachungsschaltung dazu eingerichtet, einen Ausgangswiderstand der wenigstens einen ersten Datenleitung zu bestimmen und beim Überschreiten eines vorbestimmten Schwellwerts des Ausgangswiderstands das erste Steuersignal bereitzustellen. Die Bestimmung eines Ausgangswiderstands der wenigstens einen Datenleitung ermöglicht eine einfache und sichere Erkennung einer Terminierung der ersten Datenleitung und somit den Anschluss bzw. die Trennung eines Peripheriegeräts.

Gemäß einer weiteren vorteilhaften Ausgestaltung ist die Schnittstellenüberwachungsvorrichtung durch eine Schaltung zur Erzeugung einer Referenzspannung sowie einen Komparator zum Vergleich der erzeugten Referenzspannung mit einem Spannungspegel, der von dem Ausgangswiderstand der wenigstens einen ersten Signalleitung abhängt, gekennzeichnet. Der Vergleich einer Referenzspannung mit einem Spannungspegel, der von einem Ausgangswiderstand der wenigstens einen ersten Datenleitung abhängt, erlaubt eine einfache Bestimmung des Ausgangswiderstands der ersten Datenleitung.

Gemäß einer weiteren vorteilhaften Ausgestaltung weist die Schnittstellenüberwachungsvorrichtung wenigstens eine mit einer dritten Datenleitung des Schnittstellenanschlusses gekoppelte zweite Überwachungsschaltung auf, die dazu eingerichtet ist, eine Aktivität der wenigstens einer dritten Datenleitung zu überwachen und beim Erkennen, dass eine Aktivität der dritten Datenleitung nicht vorhanden ist, ein zweites Steuersignal bereitzustellen, wobei die Übertragung von Daten über die dritte Schnittstellenleitung unabhängig von der Übertragung von Daten über die erste Datenleitung ist.

Eine derartige Schnittstellenüberwachungsvorrichtung eignet sich insbesondere zum Einsatz in Host-Adaptern, an die Geräte sowohl gemäß der USB 2.0- als auch gemäß der USB 3.0-Spezifikation angeschlossen werden können. Da die Signalisierung gemäß der USB 2.0- und der USB 3.0-Spezifikation über getrennte Datenleitungen erfolgt, ist eine getrennte Überwachung der unterschiedlichen Datenleitungen vorteilhaft, um eine Trennung von USB-Geräten unabhängig von ihrer Geschwindigkeitsklasse von einer derartigen Schnittstelle zu erkennen.

Gemäß einer weiteren vorteilhaften Ausgestaltung ist die erste Deaktivierungsschaltung dazu eingerichtet, den Datenverkehr über die erste und die dritte Datenleitung des Schnittstellenanschlusses nur dann dauerhaft zu unterbinden, wenn die erste Überwachungsschaltung das erste Steuersignal und die zweite Überwachungsschaltung das zweite Steuersignal gleichzeitig bereitstellen. Durch eine derartige Deaktivierungsschaltung kann die unbeabsichtigte Auslösung der Deaktivierungsschaltung bei Inaktivität auf nur einer der zwei unterschiedlichen Datenleitungen vermieden werden.

Gemäß einer alternativen Ausgestaltung ist die Schnittstellenüberwachungsvorrichtung durch eine zweite Deaktivierungsschaltung gekennzeichnet, die dazu eingerichtet ist, den Datenverkehr über die dritte Datenleitung des Schnittstellenanschlusses bis zu einem Rücksetzen der Schnittstellenüberwachungsvorrichtung dauerhaft zu unterbinden, wenn das zweite Steuersignal durch die zweite Überwachungsschaltung bereitgestellt wird. Sofern ein Wechsel zwischen einer Signalisierung über die unterschiedlichen Datenleitungen von vorneherein ausgeschlossen werden kann, können die erste und zweite Überwachungs- beziehungsweise Deaktivierungsschaltung auch unabhängig voneinander betrieben werden.

Die beschriebene Schnittstellenüberwachungsvorrichtung eignet sich insbesondere zur Verwendung in einem USB-Host-Adapter mit wenigstens einem USB-Schnittstellenanschluss. Ein USB-Schnittstellenanschluss weist wenigstens ein erstes sowie ein zweites differenzielles Adernpaar zum gleichzeitigen Senden beziehungsweise Empfangen von Daten mit einer ersten Geschwindigkeit und ein drittes differenzielles Adernpaar zum wahlfreien Senden oder Empfangen von Daten mit wenigstens einer zweiten Geschwindigkeit auf.

Weitere vorteilhafte Ausgestaltungen der Erfindung sind in den abhängigen Patentansprüchen sowie der nachfolgenden ausführlichen Beschreibung von Ausführungsbeispielen beschrieben.

Nachfolgend werden unterschiedliche Ausführungsbeispiele der Erfindung unter Bezugnahme auf Figuren im Detail erläutert. Dabei werden in unterschiedlichen Ausführungsbeispielen für gleiche oder gleichartige Komponenten dieselben Bezugszeichen verwendet. In den Figuren zeigen:
- Figur 1: eine Anordnung umfassend ein Computersystem mit einem UBS-Host-Adapter,
- Figur 2: eine schematische Darstellung einer ersten Überwachungsschaltung,
- Figur 3: eine schematische Darstellung einer Schnittstellenüberwachungsvorrichtung zur gleichzeitigen Überwachung von unterschiedlichen Datenleitungen,
- Figur 4: eine schematische Darstellung der Arbeitsweise zur kombinierten Überwachung unterschiedlicher Datenleitungen,
- Figur 5: ein detaillierter Schaltplan einer Schnittstellenüberwachungsvorrichtung,
- Figur 6: ein Flussdiagramm zur schematischen Darstellung der Steuerung eines USB-Host-Adapters in unterschiedlichen Betriebszuständen.

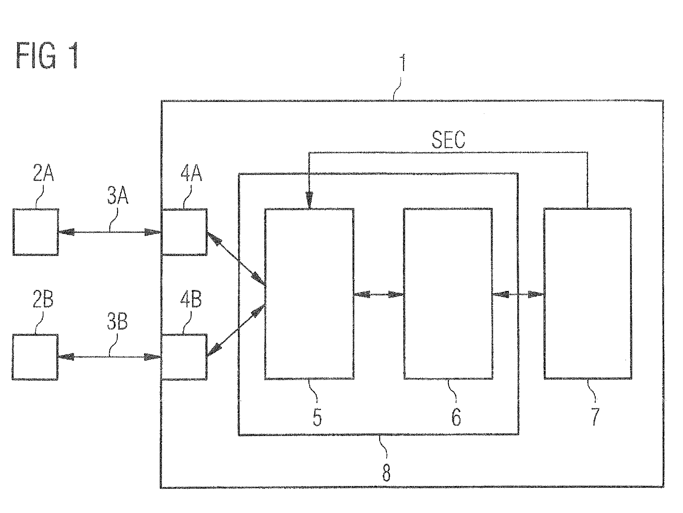

Figur 1 zeigt eine Anordnung umfassend ein Computersystem 1 und zwei an das Computersystem 1 angeschlossene Peripheriegeräte 2A und 2B. Die Peripheriegeräte 2A und 2B sind über jeweils eine USB-Verbindung 3A beziehungsweise 3B mit dem Computersystem 1 verbunden. Im Ausführungsbeispiel handelt es sich bei dem USB-Gerät 2A um ein Peripheriegerät gemäß dem USB 2.0-Standard. Bei dem Peripheriegerät 2B handelt es sich im Ausführungsbeispiel um ein Peripheriegerät gemäß dem USB 3.0-Standard.

Das Computersystem 1 umfasst einen ersten Schnittstellenanschluss 4A und einen zweiten Schnittstellenanschluss 4B, an denen die USB-Verbindungen 3A beziehungsweise 3B angeschlossen sind. Die Schnittstellenanschlüsse 4A und 4B sind mit einer Schnittstellenüberwachungsvorrichtung 5 verbunden. Die Schnittstellenüberwachungsvorrichtung 5 ist mit einem Schnittstellenbaustein 6 verbunden, der die Schnittstellenanschlüsse 4A und 4B ansteuert und den Datenaustausch zwischen den Peripheriegerät 2A und 2B und dem Computersystem 1 steuert. Beispielsweise handelt es sich hierbei um einen so genannten I/O-Controller Hub (ICH) oder um einen gesonderten Schnittstellencontroller. Über ein Steuersignal SEC kann die Überwachungsvorrichtung 5 durch den BIOS-Baustein 7 aktiviert werden. Eine weitergehende Wechselwirkung des BIOS bei der Überwachung der Schnittstellenanschlüsse 4A und 4B ist nicht erforderlich. Der Schnittstellenbaustein 6 ist mit einem BIOS-Baustein 7 mit Programmcode zur Initialisierung der Schnittstellenanschlüsse 4A und 4B verbunden.

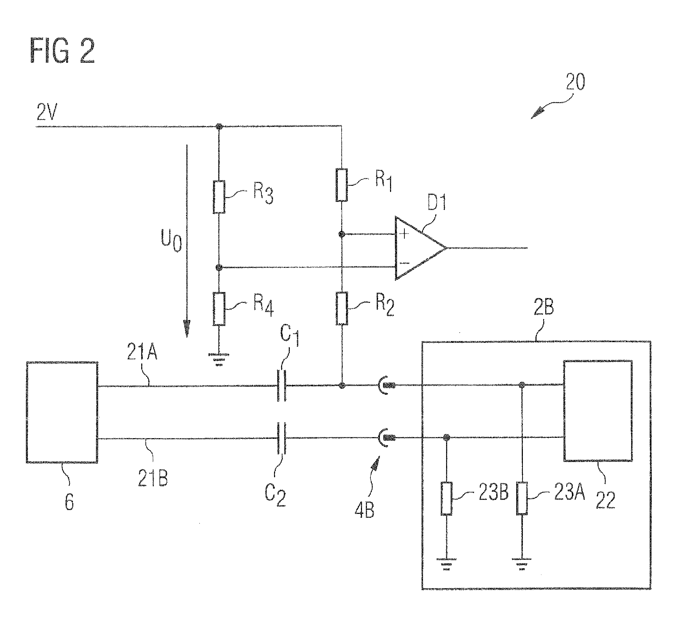

Der Schnittstellenbaustein 6 bildet den Kern eines USB Hostadapters 8. Je nach Ausgestaltung gehören jedoch auch, wie in der Figur 2 dargestellt, die Schnittstellenüberwachungsvorrichtung 5 zum Hostadapter 8. Optional können auch die Schnittstellenanschlüsse 4A und 4B selbst und/oder weitere Teile zur Ansteuerung, wie zum Beispiel der BIOS-Baustein 7, zum Hostadapter 8 gehören.

Eine Möglichkeit zur Überwachung einer Trennung des Peripheriegerätes 2A gemäß dem USB 2.0-Standard von dem ersten Schnittstellenanschluss 4A wurde bereits in der Patentanmeldung DE 10 2008 035 103 A1 ausführlich beschrieben, auf deren Offenbarungsgehalt insoweit Bezug genommen wird. Die nachfolgende Beschreibung betrifft daher im Wesentlichen die Überwachung des Peripheriegerätes 2B gemäß der USB 3.0-Spezifikation auf Trennung von dem zweiten Schnittstellenanschluss 4B.

In der Figur 2 ist eine erste Überwachungsschaltung 20 zur Überwachung einer ersten Datenleitung 21A dargestellt. Bei der ersten Datenleitung 21A handelt es sich im Ausführungsbeispiel um eine Leitung eines ersten differenziellen Adernpaares 21 zum Übertragen von Daten von dem Schnittstellenbaustein 6 zu dem Peripheriegerät 2B gemäß dem USB 3.0-Standard.

Wie der Figur 2 zu entnehmen ist, umfasst die erste Datenleitung 21A einen Kondensator C1 zur kapazitiven Kopplung des Schnittstellenbausteins 6 mit dem Schnittstellenanschluss 4B. Der Kondensator C1 bewirkt gleichzeitig eine Entkopplung einer Gleichstromkomponente und eine Kopplung einer Wechselstromkomponente zwischen dem Schnittstellenbaustein 6 und dem Schnittstellenanschluss 4B beziehungsweise einem daran eventuell angeschlossenen Peripheriegerät 2B.

Wie sich ebenfalls aus der Figur 2 ergibt, ist gemäß der USB 3.0-Spezifikation eine geräteseitige Terminierung beider Datenleitungen 21A und 21B des differenziellen Adernpaares 21 vorgesehen. Im Ausführungsbeispiel ist daher sowohl die erste Datenleitung 21A als auch die zugehörige weitere Datenleitung 21B über jeweils einen Terminierungswiderstand 23A beziehungsweise 23B mit einem Massepotenzial verbunden. Zusätzlich sind die Datenleitungen 21A und 21B mit einer geräteseitigen Empfangsschaltung 22 verbunden.

Um einen Anschluss des Peripheriegerätes 2B sowie mittelbar darüber auch eine Trennung des USB-Gerätes 2B von dem Schnittstellenanschluss 4B zu erkennen, umfasst die erste Überwachungsschaltung 20 einen Spannungsteiler mit den Widerständen R3 und R4 zum Bereitstellen einer Referenzspannung basierend auf einer bereitgestellten Spannung U0.

Im Ausführungsbeispiel beträgt die Spannung U0 beispielsweise 2 V und liegt daher unter der gemäß dem USB-Standard geforderten Maximalspannung von 2.2 V zur Signalisierung über die erste Datenleitung 21A. Über den Spannungsteiler mit den Widerständen R3 und R4 wird am Eingang 6 eines Komparators D1 eine Referenzspannung von beispielsweise 1,9 V bereitgestellt. Gleichzeitig wird über einen zweiten Spannungsteiler umfassend die Widerstände R1 und R2 ein Spannungsabfall am Schnittstellenanschluss 4B und somit mittelbar der Ausgangswiderstand der ersten Datenleitung 21A hinter dem Kondensator C1 bestimmt.

Ist, wie in der Figur 2 dargestellt, ein Peripheriegerät 2B mit dem entsprechenden Schnittstellenanschluss 4B verbunden, ist die erste Datenleitung 21A nach dem Kondensator C1 über den Terminierungswiderstand 23A mit dem Massepotential verbunden. Durch den Widerstand R2 fließt ein Strom, so dass der Spannungspegel am nicht invertierten Eingang des Komparators D1 unter einen Referenzpegel absinkt und der Ausgang des Komparators D1 einen niedrigen Ausgangspegel einnimmt. Ist dagegen kein Peripheriegerät 2B an dem zweiten Schnittstellenanschluss 4B angeschlossen, wird der Ausgang der ersten Datenleitung 21A hinter dem Kondensator C1 hochohmig. Das heißt, dass durch den Widerstand R2 des Spannungsteilers kein Strom fließt und der Pegel am nicht invertierenden Eingang des Komparators D1 auf die Betriebsspannung U0 ansteigt. Daher schaltet der Ausgang des Komparators D1 auf einen hohen logischen Pegel.

Die Referenzspannung in der Überwachungsschaltung 20 wird zweckmäßigerweise derart gewählt, dass die im Betrieb gemäß dem USB 3.0-Standard vorgesehene maximale Gleichspannung auf der ersten Datenleitung 21A von circa 500 mV berücksichtigt wird. Zudem kann durch die Verwendung von hochohmigen Widerständen R1 und R2 eine Verschlechterung der Signalqualität über die erste Datenleitung 21A vermieden werden.

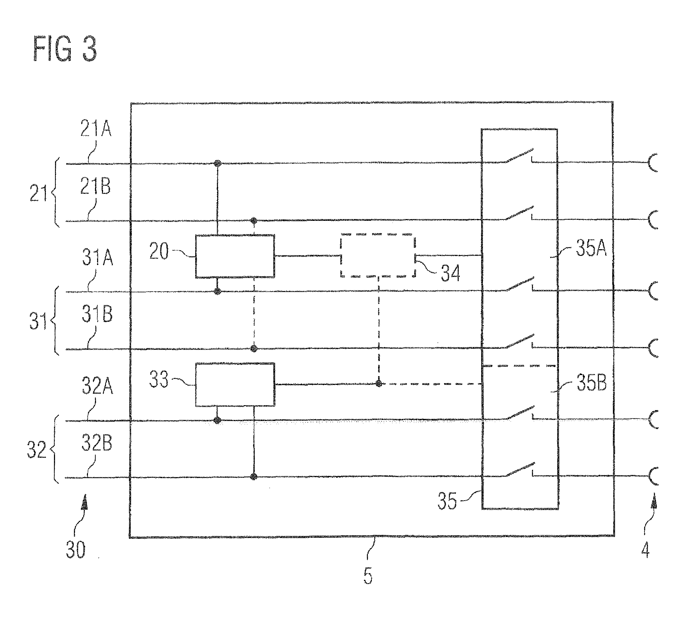

Figur 3 zeigt eine schematische Anordnung einer Schnittstellenüberwachungsvorrichtung 5 zum gleichzeitigen Überwachen von Datenleitungen für eine Signalisierung gemäß dem USB 2.0- und dem USB 3.0-Standard. Die Überwachungsvorrichtung 5 weist Eingänge 30 für zwei erste Datenleitungen 21A und 21B eines ersten differentiellen Adernpaares 21 zum Übertragen von Daten von einem Schnittstellenbaustein 6 (nicht dargestellt) zu einem an einem Schnittstellenanschluss 4 angeschlossenes Peripheriegerät 2 (nicht dargestellt) auf. Darüber hinaus weist die Schnittstellenüberwachungsvorrichtung 5 zwei zweite Datenleitungen 31A und 31B eines zweiten differentiellen Adernpaares 31 zum Empfangen von Daten von dem Peripheriegerät 2 zur Weiterleitung an den Schnittstellenbaustein 6 auf. Die Adernpaare 21 und 31 dienen zur Übertragung von Daten mit einer hohen Geschwindigkeit, insbesondere mehr als 500 MBit/s, z. B. 5 GBit/s. Schließlich weist die Schnittstellenüberwachungsvorrichtung 5 zwei dritte Datenleitungen 32A und 32B eines dritten differentiellen Adernpaares 32 zum bidirektionalen Übertragen von Daten zwischen dem Schnittstellenbaustein 6 und dem Peripheriegerät 2 mit einer niedrigeren Geschwindigkeit, beispielsweise 480 MBit/s oder weniger, auf.

Die Überwachungsvorrichtung 5 weist eine erste Überwachungsschaltung 20 sowie eine zweite Überwachungsschaltung 33 auf. Die erste Überwachungsschaltung 20 dient zur Überwachung der Terminierung wenigstens einer der ersten Datenleitungen 21A oder 21B und entspricht beispielsweise der in der Figur 2 dargestellten ersten Überwachungsschaltung 20. Alternativ oder zusätzlich kann die erste Überwachungsschaltung 20 auch eine der zweiten Datenleitungen 31A oder 31B überwachen. Selbstverständlich kann auch eine weitere Überwachungsschaltung zur Überwachung einer oder beider der zweiten Datenleitungen 31A und 31B vorgesehen sein. Die zweite Überwachungsschaltung 33 überwacht die Aktivität der dritten Datenleitungen 32A und 32B. Insbesondere überwacht die zweite Überwachungsschaltung 33, ob über das differenzielle Leitungspaar mit den dritten Datenleitungen 32A und 32B eine Datenübertragung stattfindet wie dies beispielsweise in der DE 10 2008 035 103 A1 offenbart ist.

Peripheriegeräte 2 gemäß dem USB-Standard werden Daten entweder über die ersten und zweiten Datenleitungen 21A und 21B sowie 31A und 31B oder über die dritten Datenleitungen 32A und 32B übertragen. Eine gleichzeitige Übertragung von Daten über sämtliche Adernpaare 21, 31 und 32 ist gemäß dem USB 3.0-Standard dagegen nicht vorgesehen. Dementsprechend signalisiert zumindest eine der Überwachungsschaltungen 20 beziehungsweise 33 jeweils ein Steuersignal, das angibt, dass die jeweils zugeordneten Adernpaare 21 und 31 beziehungsweise 32 nicht genutzt werden. Schließt man beispielsweise ein USB 2.0-Gerät an einen USB 3.0-Host-Adapter an, werden die ersten und zweiten Datenleitungen 21A, 21B, 31A und 31B durch das USB 2.0-Gerät nicht terminiert und die erste Überwachungsschaltung 20 liefert ein erstes Steuersignal. Beim Anschluss eines USB 3.0-Gerätes an einem USB 3.0-Host-Adapter findet eine Kommunikation dagegen ausschließlich über die ersten Datenleitungen 21A und 21B sowie zweiten Datenleitungen 31A und 31B statt, während über die dritten Datenleitungen 32A und 32B keine Informationen übertragen werden. Demzufolge liefert in diesem Fall die zweite Überwachungsschaltung 33 ein zweites Steuersignal.

Um in diesen Fällen eine unbeabsichtigte Detektion einer Trennung des USB-Peripheriegerätes 2 von dem Schnittstellenanschluss 4 zu verhindern, umfasst die Schnittstellenüberwachungsvorrichtung 5 gemäß Figur 3 eine optionale Logikschaltung 34, die das erste Steuersignal der ersten Überwachungsschaltung 20 mit dem zweiten Steuersignal der zweiten Überwachungsschaltung 33 verknüpft. Insbesondere gibt die Logikschaltung 34 erst dann ein Steuersignal zum dauerhaften Deaktivieren des Schnittstellenanschluss 4 an eine gemeinsame Deaktivierungsschaltung 35 aus, wenn sowohl das erste Steuersignal der ersten Überwachungsschaltung 20 als auch das zweite Steuersignal der zweiten Überwachungsschaltung 33 anzeigen, dass die jeweils zugeordneten Datenleitungen 21A, 21B, 31A, 31B, 32A und 32B nicht genutzt werden.

Alternativ ist es auch möglich, getrennte Deaktivierungsschaltungen 35A und 35B für die Datenleitungen 21A, 21B, 31A und 31B beziehungsweise 32A und 32B vorzusehen. In diesem Fall kann auf die Logikschaltung 34 verzichtet werden. Allerdings ist ein Wechsel der Betriebsart eines Hostadapters 8 oder daran angeschlossenen Peripheriegerätes 2 im Betrieb dann nicht möglich. Im aktuellen USB 3.0-Standard ist ein solcher Wechsel der Betriebsart nicht vorgesehen.

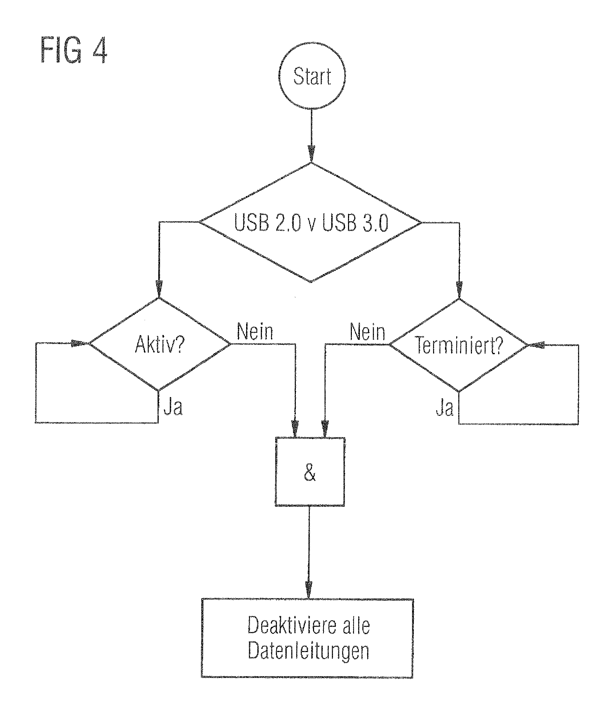

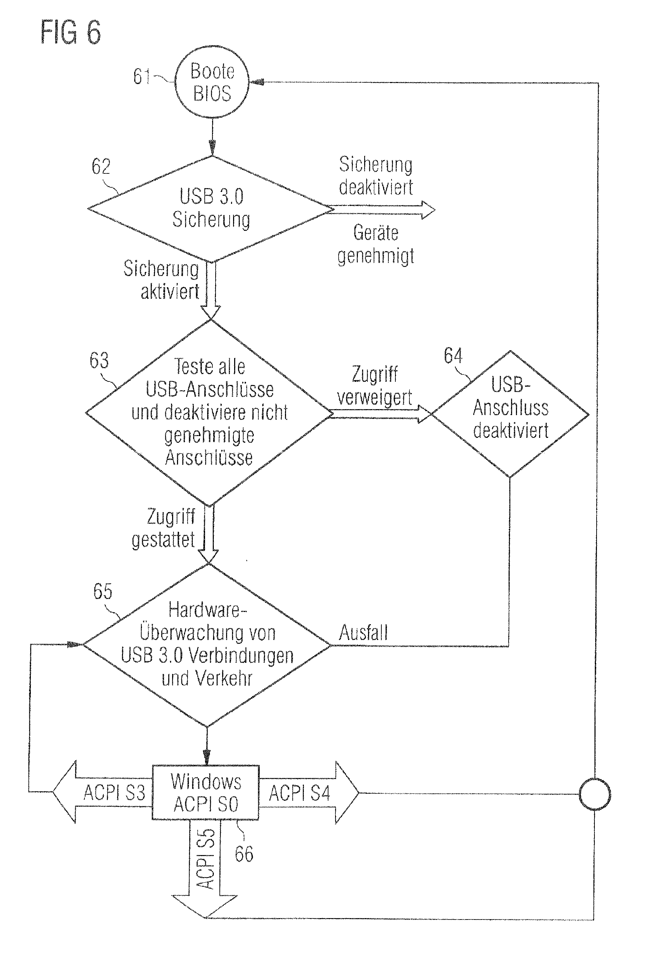

Die Verknüpfung der einzelnen Überwachungs- und Sicherheitskomponenten der Schnittstellenüberwachungsvorrichtung 5 ist noch einmal schematisch in der Figur 4 dargestellt. Zusätzlich zu der Verknüpfung des ersten und zweiten Steuersignals durch die Logikschaltung 34 wird dort auch ersichtlich, dass in Abhängigkeit einer ursprünglichen Geräteerkennung gemäß dem USB 2.0- oder dem USB 3.0-Standard unterschiedliche Sicherheitsüberprüfungen durchgeführt werden. Diese werden später unter Bezugnahme auf die Figur 6 im Detail beschrieben.

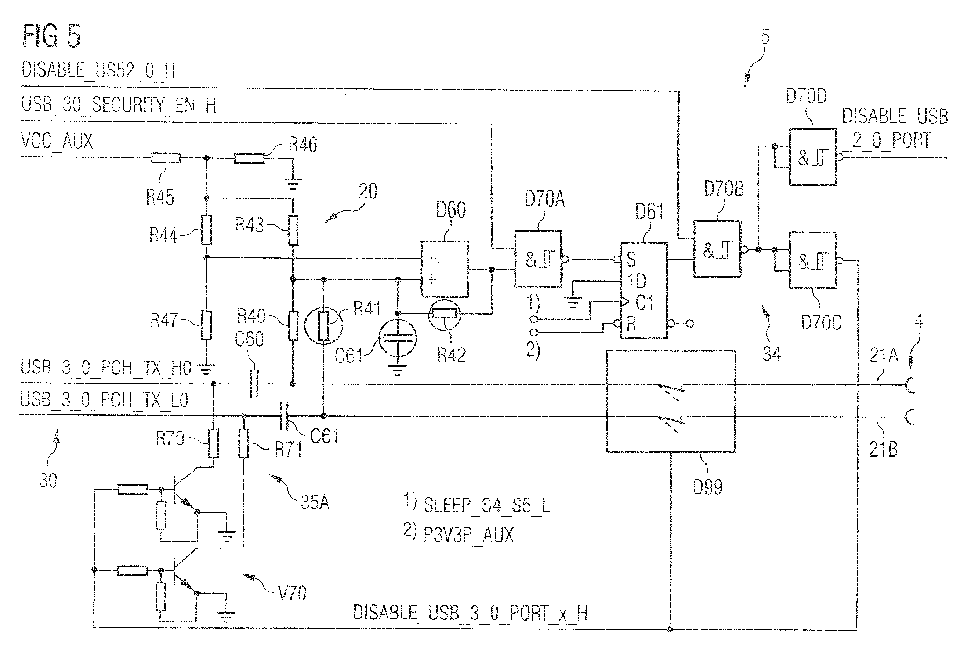

In der Figur 5 ist ein detaillierter Schaltplan einer Schnittstellenüberwachungsvorrichtung 5 dargestellt. Neben der bereits bezüglich der Figur 2 beschriebenen ersten Überwachungsschaltung 20 umfasst die Schnittstellenüberwachungsvorrichtung 5 insbesondere eine detaillierte Darstellung der Deaktivierungsschaltung 35 sowie der Logikschaltung 34. Dagegen ist die zweite Überwachungsschaltung 33 zur Überwachung der Datenleitungen D+ und D- gemäß dem USB 2.0-Standard in der Figur 5 nicht dargestellt, um deren Übersichtlichkeit zu bewahren. Stattdessen wird der Logikschaltung 34 gemäß Figur 5 lediglich ein Steuersignal DISABLE_USB2_0_H zugeführt, das anzeigt, dass die zweite Überwachungsschaltung 33 wegen Inaktivität der dritten Datenleitungen 32A und 32B ausgelöst wurde.

Die Logikschaltung 34 umfasst im Wesentlichen vier Logikgatter D70A bis D70D und einen Flip-Flop-Baustein D61. Das erste Logikgatter D70A erhält ein weiteres Steuersignal USB_30_SECURITY_EN_H, das angibt, ob die Überwachungsschaltung 20 grundsätzlich aktiviert wurde. Beispielsweise wird dieses Signal beim Booten von einem BIOS-Baustein 7 bereitgestellt. Der Flip-Flop-Baustein D61 speichert den Zustand der Überwachungsschaltung 20 nach deren Auslösung und verhindert insbesondere ein Rücksetzen der einmal ausgelösten Überwachungsschaltung 20 durch das Betriebssystem oder eine andere Softwarekomponente. Die Überwachung durch den Flip-Flop-Baustein wird nur unterbrochen, wenn das Computersystem 1 sich in einen Schlafzustand begibt, der eine Neuinitialisierung der Schnittstellenanschlüsse 4 erforderlich macht. Beispiele hierfür sind die ACPI-Zustände S4 (Hibernate) und S5 (Soft-off). Hierzu wird ein Steuersignal SLEEP_S4-S5_L über einen Takteingang des Flip-Flops D61 zur Verfügung gestellt. Über ein letztes Steuersignal P3V3P_Aux wird das Flip-Flop D61 schließlich zurückgesetzt, wenn eine Hilfsspannung des Computersystems 1 zum ersten Mal bereitgestellt wird. Dies ist insbesondere der Fall, wenn das Computersystem zurückgesetzt oder neu gestartet wird. Über das nachfolgende zweite Logikgatter D70B werden das durch den Flip-Flop-Baustein D61 gepufferte Steuersignal der ersten Überwachungsschaltung 20 sowie das Überwachungssignal der zweiten Überwachungsschaltung 33 logisch miteinander verknüpft.

Über ein drittes Logikgatter D70C wird das kombinierte Steuersignal der Deaktivierungsschaltung 35A zum dauerhaften Deaktivieren der ersten Datenleitungen 21A und 21B zugeführt. Über ein weiteres Logikgatter D70D wird dasselbe Steuersignal auch an eine weitere, in der Figur 5 wiederum nicht dargestellte Schaltung zum Deaktivieren der dritten Datenleitungen 32A und 32B gemäß dem USB 2.0-Protokoll zugeführt.

Durch die Deaktivierungsschaltung 35A werden die ersten Datenleitungen 21A und 21B auf Seiten des Eingangs 30 zum Anschluss an den Schnittstellenbausteins 6 (nicht dargestellt) über zwei Transistoren V70 und Pull-Down-Widerstände R70 bzw. R71 auf ein vorbestimmtes Bezugspotenzial, insbesondere das Massepotenzial herabgezogen. Auf diese Weise ist eine Kommunikation zwischen einem Peripheriegerät 2 (nicht dargestellt) und dem Schnittstellenbaustein 6 über die über den Kondensator C60 beziehungsweise C61 gekoppelten Datenleitungen 21A und 21B nicht mehr möglich.

In der Figur 5 ist alternativ zur Deaktivierungsschaltung 35A ein Hochfrequenzschaltelement D99 vorgesehen. Das Hochfrequenzschaltelement D99 wird entweder vor oder hinter den kapazitiven Elementen C60 beziehungsweise C61 in die ersten Datenleitungen 21A und 21B eingeschleift und unterbricht ebenfalls eine Kommunikation zwischen dem Schnittstellenanschluss 4 und dem Schnittstellenbaustein 6.

Die konkrete Implementierung der Überwachungsschaltung 20 gemäß Figur 5 unterscheidet sich von der schematischen Darstellung der Überwachungsschaltung 20 gemäß Figur 2 insbesondere durch die gleichzeitige Überwachung der beiden der ersten Datenleitungen 21A und 21B. Wie durch den Kreis um den Widerstand R41 angedeutet ist, ist die Bestückung dieser Komponente jedoch optional, da aufgrund der beidseitigen Terminierung durch ein Peripheriegerät 2 die Überwachung einer einzelnen Datenleitung 21A oder 21B zur Detektion einer Trennung ausreicht.

Die Schnittstellenüberwachung kann noch weiter verbessert werden, wenn zusätzlich zum Anschluss bzw. dem Trennen von Peripheriegeräten 2 auch deren Geräteklasse durch eine Sicherheitskomponente überprüft wird. Der Startvorgang des Computersystem 1 mit der darin enthaltenen Schnittstellenüberwachungsvorrichtung 5 für eine solche verbesserte Ausgestaltung ist noch einmal schematisch in der Figur 6 dargestellt.

Beim Einschalten oder Neustart des Computersystems 1 findet ein Startvorgang unter Kontrolle des BIOS 7 statt. Dies ist im Schritt 61 dargestellt.

In einem Schritt 62 wird anhand einer gespeicherten Einstellung überprüft, ob eine Schnittstellenüberwachung für Peripheriegeräte gemäß der USB 3.0-Spezifikation gewünscht ist oder nicht. Ist keine Schnittstellenüberwachung gewünscht, werden alle Schnittstellenanschlüsse 4 freigegeben und die Schnittstellenüberwachungsvorrichtung 5 bleibt deaktiviert.

Ist eine Schnittstellenüberwachung gewünscht, werden im Schritt 63 alle Schnittstellenanschlüsse 4 initialisiert und die daran angeschlossenen Peripheriegeräte 2 überprüft. Dabei werden die Schnittstellenanschlüsse 4, an die kein Peripheriegerät 2 angeschlossen ist, dauerhaft deaktiviert. Darüber hinaus werden die Schnittstellenanschlüsse 4 dauerhaft deaktiviert, an denen ein nicht zugelassener Gerätetyp, beispielsweise ein Massenspeichergerät oder USB-Hub, erkannt wurde.

Die Deaktivierung ist als Schritt 64 dargestellt. Zur Deaktivierung dient bevorzugt die erste Deaktivierungsschaltung 35A. Alternativ können die entsprechenden Schnittstellenanschlüsse 4 von dem BIOS 7 nicht an ein Betriebssystem gemeldet oder direkt im Schnittstellenbaustein 6, beispielsweise in einer Southbridge oder einem I/O Controller Hub, deaktiviert werden.

Für die verbleibenden Schnittstellenanschlüsse 4 wird die Schnittstellenüberwachungsvorrichtung 5 initialisiert. Beispielsweise wird das Signal SEC bzw. USB_30_SECURITY_EN_H auf einen hohen Logikpegel gesetzt. In einem Schritt 65 wird daher nachfolgend die Terminierung der Datenleitungen 21A und/oder 21B der aktivierten Schnittstellenanschlüsse 4 überwacht. Wird die Terminierung der Datenleitungen 21A oder 21B unterbrochen beziehungsweise steigt der Ausgangswiderstand am Datenanschluss 4 über einen vorbestimmten Referenzwert an, wird der zugehörige Schnittstellenanschluss 4 im Schritt 64 dauerhaft deaktiviert. Hierzu wird die Deaktivierungsschaltung 35A verwendet, deren Blockierung softwareseitig, insbesondere durch ein Betriebssystem, nicht mehr aufgehoben werden kann.

Des Weiteren wird im Schritt 66 überwacht, ob ein Wechsel in eine andere Betriebsart des Computersystems 1 durchgeführt wird. Bei einem Wechsel in den so genannten S3-Bereitschaftszustand, also einem Zustand, bei dem ein Prozessor zwar angehalten, ein Neustart des Systems jedoch nicht durchgeführt wird, bleibt die Schnittstellenüberwachung weiter aktiv. Beim Wechsel in einen energetisch weiter darunter liegenden Ruhezustand, beispielsweise einen der ACPI-Zustände S4, S5 oder G3, findet in jedem Fall ein nachfolgender Systemneustart statt. In diesem Fall übernimmt das BIOS im Schritt 61 erneut die Überprüfung der einzelnen Schnittstellenanschlüsse 4. Daher kann in diesen Fällen auf die Fortsetzung der Überwachung verzichtet werden und die Schaltung wird zurückgesetzt.

Somit bieten die hierin beschriebene Schaltungsanordnung und das beschriebene Verfahren einen umfassenden Schutz gegen Anschluss nicht zugelassener Peripheriegeräte 2 gemäß den USB-Standards 2.0 oder 3.0 an die Schnittstellenanschlüsse 4. Dabei ist die Schaltung verhältnismäßig einfach aufgebaut. Insbesondere kommt die Schnittstellenüberwachungsvorrichtung 5 ohne jeglichen Microcontroller aus. Des Weiteren Bedarf es nach ihrer Aktivierung auch keines Rückgriffs auf den BIOS-Baustein 7 und somit keiner Softwaresteuerung.

### Bezugszeichenliste

- 1: Computersystem
- 2: Peripheriegerät
- 3: USB-Verbindung
- 4: Schnittstellenanschluss
- 5: Schnittstellenüberwachungsvorrichtung
- 6: Schnittstellenbaustein
- 7: BIOS-Baustein
- 8: USB-Hostadapter

- 20: erste Überwachungsschaltung
- 21: erstes differentielles Adernpaar
- 21A/B: erste Datenleitung
- 22: Empfangsschaltung
- 23: Terminierungswiderstand

- 30: Eingang
- 31: zweites differentielles Adernpaar
- 31A/B: zweite Datenleitung
- 32: drittes differentielles Adernpaar
- 32A/B: dritte Datenleitung
- 33: zweite Überwachungsschaltung
- 34: Logikschaltung
- 35: Deaktivierungsschaltung

## Patentansprüche

1. Schnittstellenüberwachungsvorrichtung (5) für einen Schnittstellenanschluss (4) zum Anschließen eines Peripheriegerätes (2) über wenigstens eine erste Datenleitung (21A, 21B) an einen Schnittstellenbaustein (6), umfassend
- einen zwischen dem Schnittstellenbaustein (6) und dem Schnittstellenanschluss (4) angeordneten Kondensator (C1, C2, C60, C61), durch den der Schnittstellenanschluss (4) kapazitiv mit dem Schnittstellenbaustein (6) gekoppelt ist,
- eine mit der ersten Datenleitung (21A, 21B) auf Seiten des Schnittstellenanschlusses (4) gekoppelte erste Überwachungsschaltung (20), die dazu eingerichtet ist, wenigstens eine geräteseitige Terminierung der ersten Datenleitung (21A, 21B) zu überwachen und beim Erkennen, dass eine Terminierung der ersten Datenleitung (21A, 21B) nicht vorhanden ist, ein erstes Steuersignal bereitzustellen, und
- eine erste Deaktivierungsschaltung (35A), die dazu eingerichtet ist, den Datenverkehr über die erste Datenleitung (21A, 21B) des Schnittstellenanschluss (4) bis zu einem Zurücksetzen der Schnittstellenüberwachungsvorrichtung (5) dauerhaft zu unterbinden, wenn das erste Steuersignal durch die erste Überwachungsschaltung (20) bereitgestellt wurde.

2. Schnittstellenüberwachungsvorrichtung (5) nach Anspruch 1, **dadurch gekennzeichnet, dass**
die erste Überwachungsschaltung (20) dazu eingerichtet ist, einen Ausgangswiderstand der wenigstens einen ersten Datenleitung (21A, 21B) zu bestimmen und beim Überschreiten eines vorbestimmten Schwellwerts des Ausgangswiderstands das erste Steuersignal bereitzustellen.

3. Schnittstellenüberwachungsvorrichtung (5) nach Anspruch 1, **dadurch gekennzeichnet, dass**
die erste Überwachungsschaltung (20) dazu eingerichtet ist, einen kombinierten Ausgangswiderstand der wenigstens einen ersten Datenleitung (21A, 21B) und wenigstens einer weiteren Datenleitung (21A, 21B, 31A, 31B) zu bestimmen und beim Überschreiten eines vorbestimmten Schwellwerts des kombinierten Ausgangswiderstands das erste Steuersignal bereitzustellen.

4. Schnittstellenüberwachungsvorrichtung (5) nach Anspruch 2 oder 3, **gekennzeichnet durch**
eine Schaltung zur Erzeugung einer Referenzspannung sowie einen Komparator (D1, D60) zum Vergleich der erzeugten Referenzspannung mit einem Spannungspegel, der von dem Ausgangswiderstand der wenigstens einen ersten Datenleitung (21A, 21B) abhängt.

5. Schnittstellenüberwachungsvorrichtung (5) nach einem der Ansprüche 1 bis 4, **gekennzeichnet durch**
eine mit wenigstens einer dritten Datenleitung (32A, 32B) gekoppelte zweite Überwachungsschaltung (33), die dazu eingerichtet ist, eine Aktivität der wenigstens einen dritten Datenleitung (32A, 32B) zu überwachen und beim Erkennen, dass eine Aktivität der wenigstens einen dritten Datenleitung (32A, 32B) nicht vorhanden ist, ein zweites Steuersignal bereitzustellen, wobei die Übertragung von Daten über die wenigstens eine dritte Schnittstellenleitung (32A, 32B) unabhängig von der Übertragung von Daten über die wenigstens eine erste Datenleitung (21A, 21B) ist.

6. Schnittstellenüberwachungsvorrichtung (5) nach Anspruch 5, **dadurch gekennzeichnet, dass**
die erste Deaktivierungsschaltung (35A) des Weiteren dazu eingerichtet ist, den Datenverkehr über die wenigstens eine erste Datenleitung (21A, 21B) und die wenigstens eine dritte Datenleitung (32A, 32B) des Schnittstellenanschlusses (4) nur dann dauerhaft zu unterbinden, wenn die erste Überwachungsschaltung (20) das erste Steuersignal und die zweite Überwachungsschaltung (33) das zweite Steuersignal gleichzeitig bereitstellen.

7. Schnittstellenüberwachungsvorrichtung (5) nach Anspruch 5, **gekennzeichnet durch**
eine zweite Deaktivierungsschaltung (35B), die dazu eingerichtet ist, den Datenverkehr über die wenigstens eine dritte Datenleitung (32A, 32B) des Schnittstellenanschlusses (4) bis zu einem Rücksetzen der Schnittstellenüberwachungsvorrichtung (5) dauerhaft zu unterbinden, wenn das zweite Steuersignal **durch** die zweite Überwachungsschaltung (33) bereitgestellt wurde.

8. Schnittstellenüberwachungsvorrichtung (5) nach einem der Ansprüche 1 bis 7, **dadurch gekennzeichnet, dass** die Schnittstellenüberwachungsvorrichtung (5) als diskrete Hardwareschaltung ausgeführt ist, wobei zumindest die erste Überwachungsschaltung (20) funktional unabhängig von einer Softwaresteuerung des Schnittstellenanschlusses (4) arbeitet.

9. Schnittstellenüberwachungsvorrichtung (5) nach einem der Ansprüche 1 bis 8, **dadurch gekennzeichnet, dass** die Schnittstellenüberwachungsvorrichtung (5) zur Überwachung einer Mehrzahl von Schnittstellenanschlüssen (4A, 4B) eingerichtet ist und für jeden Schnittstellenanschluss (4A, 4B) eine dem jeweiligen Schnittstellenanschluss (4A, 4B) zugeordnete erste Überwachungsschaltung (20) und/oder erste Deaktivierungsschaltung (35) vorgesehen ist.

10. Verwendung einer Schnittstellenüberwachungsvorrichtung (5) nach einem der Ansprüche 1 bis 9 in einem USB-Host-Adapter mit wenigstens einem USB-Schnittstellenanschluss, wobei der USB-Schnittstellenanschluss wenigstens ein erstes differenzielles Adernpaar (21) sowie ein zweites differenzielles Adernpaar (31) zum gleichzeitigen Senden beziehungsweise Empfangen von Daten mit einer ersten Geschwindigkeit aufweist und ein drittes differenzielles Adernpaar (32) zum wahlfreien Senden oder Empfangen von Daten mit wenigstens einer zweiten Geschwindigkeit aufweist.

11. Verwendung nach Anspruch 10, **dadurch gekennzeichnet, dass** beim Start des Host-Adapters eine Geräteklasse eines an den Schnittstellenanschluss (4) angeschlossenen Peripheriegerätes (2) ermittelt und mit einer Liste zulässiger Geräteklassen verglichen wird, und bei Erkennung eines Peripheriegerätes (2) einer zulässigen Klasse eine Überwachung des Schnittstellenanschlusses (4) durch die erste Überwachungsschaltung (20) aktiviert wird und bei Erkennung eines Peripheriegerätes (2) mit einer nicht zulässigen Geräteklasse der Schnittstellenanschluss (4) durch die erste Deaktivierungsschaltung (35A) deaktiviert wird.

## Claims

1. Interface monitoring apparatus (5) for an interface port (4) for connecting a peripheral device (2) to an interface chip (6) by means of at least one first data line (21A, 21B), comprising
- a capacitor (C1, C2, C60, C61) which is arranged between the interface chip (6) and the interface port (4) and which capacitively couples the interface port (4) to the interface chip (6),
- a first monitoring circuit (20) which is coupled to the first data line (21A, 21B) at the interface port (4) and which is set up to monitor at least one device-end termination of the first data line (21A, 21B) and to provide a first control signal in the event of it being identified that a termination for the first data line (21A, 21B) is not present, and
- a first deactivation circuit (35A) which is set up to permanently stop the data traffic via the first data line (21A, 21B) of the interface port (4) until the interface monitoring apparatus (5) is reset when the first control signal has been provided by the first monitoring circuit (20).

2. Interface monitoring apparatus (5) according to Claim 1, **characterized in that**
the first monitoring circuit (20) is set up to determine an output impedance of the at least one first data line (21A, 21B) and to provide the first control signal in the event of a predetermined threshold value for the output impedance being exceeded.

3. Interface monitoring apparatus (5) according to Claim 1, **characterized in that**
the first monitoring circuit (20) is set up to determine a combined output impedance of the at least one first data line (21A, 21B) and at least one further data line (21A, 21B, 31A, 31B) and to provide the first control signal in the event of a predetermined threshold value for the combined output impedance being exceeded.

4. Interface monitoring apparatus (5) according to Claim 2 or 3, **characterized by**
a circuit for producing a reference voltage and also a comparator (D1, D60) for comparing the reference voltage produced with a voltage level which is dependent on the output impedance of the at least one first data line (21A, 21B).

5. Interface monitoring apparatus (5) according to one of Claims 1 to 4, **characterized by**
a second monitoring circuit (33) which is coupled to at least one third data line (32A, 32B) and which is set up to monitor an activity on the at least one third data line (32A, 32B) and to provide a second control signal in the event of it being identified that an activity is not present on the at least one third data line (32A, 32B), wherein the transfer of data via the at least one third interface line (32A, 32B) is independent of the transfer of data via the at least one first data line (21A, 21B).

6. Interface monitoring apparatus (5) according to Claim 5, **characterized in that**
the first deactivation circuit (35A) is furthermore set up to permanently stop the data traffic via the at least one first data line (21A, 21B) and the at least one third data line (32A, 32B) of the interface port (4) only when the first monitoring circuit (20) provides the first control signal and the second monitoring circuit (33) provides the second control signal simultaneously.

7. Interface monitoring apparatus (5) according to Claim 5, **characterized by**
a second deactivation circuit (35B) which is set up to permanently stop the data traffic via the at least one third data line (32A, 32B) of the interface port (4) until the interface monitoring apparatus (5) is reset when the second control signal has been provided by the second monitoring circuit (33).

8. Interface monitoring apparatus (5) according to one of Claims 1 to 7, **characterized in that**
the interface monitoring apparatus (5) is in the form of a discrete hardware circuit, wherein at least the first monitoring circuit (20) operates functionally independently of software control of the interface port (4).

9. Interface monitoring apparatus (5) according to one of Claims 1 to 8, **characterized in that**
the interface monitoring apparatus (5) is set up to monitor a plurality of interface ports (4A, 4B), and for each interface port (4A, 4B) a first monitoring circuit (20) and/or first deactivation circuit (35) associated with the respective interface port (4A, 4B) is provided.

10. Use of an interface monitoring apparatus (5) according to one of Claims 1 to 9 in a USB host adapter having at least one USB interface port, wherein the USB interface port has at least one first differential wire pair (21) and a second differential wire pair (31) for simultaneously sending and receiving data at a first speed and has a third differential wire pair (32) for randomly sending or receiving data at at least one second speed.

11. Use according to Claim 10, **characterized in that** when the host adapter is started a device class for a peripheral device (2) connected to the interface port (4) is ascertained and is compared with a list of admissible device classes, and monitoring of the interface port (4) is activated by the first monitoring circuit (20) in the event of a peripheral device (2) in an admissible class being identified, and the interface port (4) is deactivated by the first deactivation circuit (35A) in the event of a peripheral device (2) with an inadmissible device class being identified.

## Revendications

1. Ensemble (5) de surveillance d'interface pour un raccordement (4) d'interface permettant de raccorder un appareil périphérique (2) à un module d'interface (6) par l'intermédiaire d'au moins un conducteur de données (21A, 21B), comprenant
un condensateur (C1, C2, C60, C61) disposé entre le module d'interface (6) et le raccordement d'interface (4) et par lequel le raccordement d'interface (4) est raccordé capacitivement au module d'interface (6),
un premier circuit de surveillance (20) raccordé au premier conducteur de données (21A, 21B) du côté du raccordement d'interface (4) et conçu pour surveiller au moins une terminaison côté appareil du premier conducteur de données (21A, 21B) et pour délivrer un premier signal de commande en cas de détection qu'une terminaison du premier conducteur de données (21A, 21B) n'est pas présente, et
un premier circuit de désactivation (35A) conçu pour interrompre durablement le trafic de données sur le premier conducteur de données (21A, 21B) du raccordement d'interface (4) jusqu'à la réinitialisation de l'ensemble (5) de surveillance d'interface si le premier signal de commande a été délivré par le premier circuit de surveillance (20).

2. Ensemble (5) de surveillance d'interface selon la revendication 1, **caractérisé en ce que** le premier circuit de surveillance (20) est conçu pour déterminer une résistance de sortie du ou des premiers conducteurs de données (21A, 21B) et pour délivrer le premier signal de commande en cas de dépassement d'une valeur de seuil prédéterminée de la résistance de sortie.

3. Ensemble (5) de surveillance d'interface selon la revendication 1, **caractérisé en ce que** le premier circuit de surveillance (20) est conçu pour déterminer une résistance de sortie combinée du ou des premiers conducteurs de données (21A, 21B) et du ou des autres conducteurs de données (21A, 21B, 31A, 31B) et pour délivrer le premier signal de commande en cas de dépassement d'une valeur de seuil prédéterminée de la résistance de sortie combinée.

4. Ensemble (5) de surveillance d'interface selon la revendication 2 ou 3, **caractérisé par** un circuit de formation d'une tension de référence ainsi que par un comparateur (D1, D60) qui compare la tension de référence fournie à un niveau de tension qui dépend de la résistance de sortie du ou des premiers conducteurs de données (21A, 21B).

5. Ensemble (5) de surveillance d'interface selon l'une des revendications 1 à 4, **caractérisé par** un deuxième circuit de surveillance (33) raccordé à au moins un troisième conducteur de données (32A, 32B) et conçu pour surveiller l'activité du ou des troisièmes conducteurs de données (32A, 32B) et pour délivrer un deuxième signal de commande en cas de détection qu'une activité du ou des troisièmes conducteurs de données (32A, 32B) n'est pas présente, la transmission de données par le ou les conducteurs d'interface (32A, 32B) dépendant de la transmission de données sur le ou les premiers conducteurs de données (21A, 21B).

6. Ensemble (5) de surveillance d'interface selon la revendication 5, **caractérisé en ce que** le premier circuit de désactivation (35A) est en outre conçu pour interrompre durablement le trafic de données sur le ou les premiers conducteurs de données (21A, 21B) et le ou les troisièmes conducteurs de données (32A, 32B) du raccordement d'interface (4) uniquement si le premier circuit de surveillance (20) délivre le premier signal de commande en même temps que le deuxième circuit de surveillance (33) délivre le deuxième signal de commande.

7. Ensemble (5) de surveillance d'interface selon la revendication 5, **caractérisé par** un deuxième circuit de désactivation (35B) conçu pour interrompre durablement le trafic de données sur le ou les troisièmes conducteurs de données (32A, 32B) du raccordement d'interface (4) jusqu'à la réinitialisation de l'ensemble (5) de surveillance d'interface lorsque le deuxième signal de commande a été délivré par le deuxième circuit de surveillance (33).

8. Ensemble (5) de surveillance d'interface selon l'une des revendications 1 à 7, **caractérisé en ce que** l'ensemble (5) de surveillance d'interface est réalisé sous la forme d'un circuit matériel distinct, le premier circuit de surveillance (20) travaillant en fonctionnement indépendant d'une commande logicielle du raccordement d'interface (4).

9. Ensemble (5) de surveillance d'interface selon l'une des revendications 1 à 8, **caractérisé en ce que** l'ensemble (5) de surveillance d'interface est conçu pour surveiller plusieurs raccordements d'interface (4A, 4B) et **en ce qu'**un premier circuit de surveillance (20) et/ou un premier circuit de désactivation (35) associé à chaque raccordement d'interface (4A, 4B) sont prévus pour chaque raccordement d'interface (4A, 4B).

10. Utilisation d'un ensemble (5) de surveillance d'interface selon l'une des revendications 1 à 9 dans un adaptateur USB-hôte présentant au moins un raccordement d'interface USB, le raccordement d'interface USB présentant au moins une première paire différentielle (21) de fils ainsi qu'une deuxième paire différentielle (31) de fils permettant d'émettre ou de recevoir simultanément des données à une première vitesse et une troisième paire différentielle (32) de fils permettant d'envoyer ou de recevoir sélectivement des données à au moins une deuxième vitesse.

11. Utilisation selon la revendication 10, **caractérisée en ce que** lors du démarrage de l'adaptateur hôte, une classe d'un appareil périphérique (2) raccordé au raccordement d'interface (4) est déterminée et est comparée à une liste de classes d'appareils admissibles et **en ce qu'**en cas de détection d'un appareil périphérique (2) d'une classe admissible, une surveillance du raccordement d'interface (4) par le premier circuit de surveillance (20) est activée et en cas de détection d'un appareil périphérique (2) d'une classe d'appareil non admissible, le raccordement d'interface (4) est désactivé par le premier circuit de désactivation (35A).
